# EUROPEAN PATENT APPLICATION

(11) **EP 1 696 203 A1**
(43) Date of publication of application: **30.08.2006**
(21) Application number: 04771707.9
(22) Date of filing: 16.08.2004
(51) Int. Cl.: G01B 21/22

(54) **ROTARY SWITCH MECHANISM**

(30) Priority: 28.11.2003 JP 2003398860
(71) Applicant: Valeo Thermal Systems Japan Corporation, Konan-machi, Osato-gun Saitama 3600193 (JP)
(72) Inventor: MISUDA, Hiroshi, ZEXEL VALEO CLIMATE CONTROL CORP, Osato-gun Saitama 3600193 (JP)
(74) Representative: Hofmann, Harald
(86) International application number: PCT/JP2004/011746
(87) International publication number: WO 2005/052510

(57) **Abstract**

The present invention provides a rotary switch mechanism comprising a dial unit and a position sensor that rotates as the dial unit rotates, with the rotational position of the dial unit determined based upon an output signal provided by the position sensor. The present invention allows the dial unit to assume a greater rotational angle range and also allows the number of dial steps to be increased by assuring the desired level of reading resolution for the sensor. The present invention includes a plurality of position sensors 13c-1, 13c-2 and 13c-3 and detection switches 16 and 17 the output signals of which are switched in correspondence to the rotational position assumed by the dial unit. The entire angle range over which the dial unit is allowed to rotate is divided into a plurality of range blocks, a specific position sensor is designated to one of these blocks and the position sensor engaged in operation is switched based upon the output signal provided by the detection switches 16 and 17. Alternatively, the range over which a detection switch is in an ON state may be designated to a predetermined rotational position assumed by the dial unit and the output signal from a position sensor may be used for the position detection over the range in which the detection switch is in an OFF state.

## Description

### TECHNICAL FIELD

The present invention relates to a rotary switch mechanism in an operating panel or the like operated to set or adjust control to be executed on an air-conditioning system installed in, for instance, a vehicle.

### BACKGROUND ART

Rotary switch mechanisms proposed in the related art for similar applications include that disclosed in Patent Reference Literature 1 detailed below. The structure disclosed in the publication includes a cylindrical distended portion formed at a case member to which a printed board is bonded, a cylindrical drive unit rotatably mounted at the cylindrical distended portion, a dial unit fixed onto the cylindrical drive unit, a first gear unit formed at the bottom of the side surface of the cylindrical drive unit, a second gear unit that interlocks with the first gear unit and a position sensor fixed onto the rotating shaft of the second gear unit. The structure is characterized in that the length of the arc corresponding to the central angle formed as the dial unit rotates over a single step along its rotating direction is set equal to the length of the arc corresponding to the central angle formed as the position sensor rotates over a single step along its rotating direction.

In the structure, the diameter or the number of teeth at the first gear and the diameter or the number of teeth at the second gear are set in correspondence to the ratio of the central angle of the indicator positions uniformly set along the circumference of the dial unit and the central angle formed over a single step rotation of the rotational position sensor unit. As a result, it is possible to freely set the indicator position at the dial unit by using a commercially available rotational position sensor (potentiometer), achieving an advantage in that a higher level of freedom is afforded in the design of the rotary switch mechanism.

Patent Reference Literature 1: Japanese Unexamined Patent Publication No. 2001-184966

### DISCLOSURE OF THE INVENTION

### PROBLEMS TO BE SOLVED BY THE INVENTION

However, when such a position sensor is constituted with a rotary potentiometer, it is necessary to take into consideration inconsistency among individual sensors and thus, the rotational angle corresponding to a single step needs to be set to a value equal to or greater than a predetermined angle (approximately 25°) on the sensor side in order to accurately detect the absolute position of the dial unit. If the rotational angle per step is set less than the predetermined value, the position of the dial unit cannot be detected accurately. This means that if a position sensor that rotates up to the equivalent of an electrical rotational angle of, for instance, 330° is used, a rotational angle corresponding to 13 steps or more cannot be detected.

The temperature setting at an automotive air-conditioning system is normally selected in 1°-increments over a range of 18°C through 32°C. Thus, with the inconsistency among individual sensors mentioned above taken into consideration, the entire temperature range cannot be covered if the temperature setting is adjusted in the 1°-increments, since the number of temperature setting increments will be equal to 15 (15 steps are equivalent to approximately 375°). In addition, the structure described above cannot always meet the special needs of customers, e.g., adjusting the temperature setting in 0.5°C-increments. While the sensor rotational angle correspond to a single step at the dial unit may be reduced by adjusting the gear ratio of the first gear unit in the second gear unit in order to meet such special needs, an accurate read at the sensor itself will be disabled as explained earlier in such a case, and thus, the position of the dial unit will not be detected accurately.

The primary object of the present invention, which has been completed by addressing the problems discussed above, is to provide a rotary switch mechanism that allows the dial unit to be rotated over a greater rotational angle range and also allows the dial to be set at a position over a greater number of steps by assuring a high level of reading resolution on the sensor side in correspondence to smaller dial pitches (e.g., pitches corresponding to 0.5°C-increments for the temperature setting).

### MEANS FOR SOLVING THE PROBLEMS

The present invention achieves the object described above by providing a rotary switch mechanism comprising a dial unit that is allowed to rotate in steps each corresponding to a predetermined angle and a position sensor that rotates with a predetermined speed-reducing ratio relative to the rotation of the dial unit, with the rotational position of the dial unit determined based upon an output signal provided by the position sensor. The rotary switch mechanism is characterized in that it includes a plurality of such position sensors and a detection switch that switches an output signal in correspondence to the rotational position of the dial unit, that the entire angle range over which the dial unit is allowed to rotate is divided into a plurality of range blocks and each divided range block is designated to one of the position sensors, and that the position sensor to be used is selected based upon the output signal from the detection switch. (Claim 1)

Thus, since the entire angle range over which the dial unit rotates is divided into a plurality of range blocks and each block is designated to a specific position sensor to detect the rotational position of the dial unit within the block, the position of the dial unit can be detected over the full angle range, even when the dial unit rotates over a large angle range. In addition, even when the rotational angle per step at the dial unit is set to a very small value, the position of the dial unit adjusted in very small pitches can still be detected accurately by sustaining the required level of resolution through adjustment of the speed-reducing ratio between the dial unit and the position sensor.

In a mode of the present invention, the structure described above may include three position sensors and two detection switches and the position sensor to be used may be selected based upon output signals provided by the two detection switches (claim 2). More specifically, in conjunction with the three position sensors, i.e., a first position sensor, a second position sensor and a third position sensor, and the two detection switches, i.e., a first on/off switch and a second on/off switch, the range over which the dial unit is allowed to rotate may be divided into three different range blocks, first through third range blocks and the output signal from the first detection switch may be set to an ON state over the first block but set to an OFF state over the second and third range blocks, the output signal from the second detection switch may be set to an OFF state over the first and second blocks but set to an ON state over the third block, the first position sensor may be used when the output signal from the first detection switch is in an ON state and the output signal from the second detection switch is in an OFF state, the second position sensor may be used when the output signals from the first and second detection switches are both in an OFF state, and the third position sensor may be used when the output signal from the first detection switch is in an OFF state and the output signal from the second detection switch is in an ON state (claim 3).

The detection switches may each be turned on/off as a movable pin comes in contact with the cam surface a cam that rotates as the dial unit rotates, and the movable pin is moved via the cam (claim 4). Alternatively, a wall formed in an arc shape may be made to rotate as the dial unit rotates, the detection switches may each include a movable pin disposed on the locus of the wall displacement and the detection switch may enter an ON state as the movable pin comes into contact with the wall and is pressed by the wall to become displaced but may remain in an OFF state otherwise (claim 5).

While the dial unit is allowed to assume a greater rotation angle range or very small pitches in the structure described above through the combined use of a plurality of position sensors and a plurality of detection switches, the following structure, which includes a single position sensor, may be adopted as an alternative. Namely, a rotary switch mechanism comprising a dial unit allowed to rotate in steps each corresponding to a predetermined angle and a position sensor that rotates with a predetermined speed-reducing ratio relative to the rotation of the dial unit, with the rotational position of the dial unit determined based upon an output signal provided by the position sensor, may include a detection switch that enters an ON state over a specific rotation range of the dial unit and remains in an OFF state over the remaining range. In this rotary switch mechanism, the range over which the detection switch is in an ON state may be designated to specific rotational positions of the dial that may be assumed at the dial unit, whereas the rotational position of the dial unit may be determined based upon the output signal provided by the position sensor over the range over which the detection switch remains in an OFF state (claim 6). It.is desirable that the range over which the detection switch is in an ON state be set at or near the terminal position assumed by the dial unit along its rotating direction (claim 7).

By adopting this structure, in which the detection switch is designated to detect the position of the dial unit over the range not covered by the position sensor, the dial unit is allowed to rotate over a great rotation range while assuring the required level of resolution at the position sensor.

In a more specific structural example, the rotary switch mechanism may be used to switch the output mode and include a single detection switch, with the range over which the detection switch is in an ON state designated to an auto mode and the range over which the detection switch is in an OFF state designated to a manual setting mode (claim 8). Alternatively, the rotary switch mechanism may be utilized to switch the air flow volume and include a single detection switch, with the range over which the detection switch is in an ON state designated to a fan-off mode and the range over which the detection switch is in an OFF state designated to a mode for selecting a specific fan speed (claim 9).

Alternatively, the rotary switch mechanism may be utilized to switch the temperature setting for the temperature within the cabin and include two detection switches, with the range over which one of the detection switches is in an ON state designated to a mode for selecting a temperature setting lower than the lower limit of a regular temperature setting range, the range over which the other detection switch is in an ON state designated to a mode for selecting a temperature setting higher than the upper limit of the regular temperature setting range and the range over which the two detection switches are both in an OFF state designated to a mode for selecting the temperature setting within the regular temperature setting range (claim 10).

### EFFECT OF THE INVENTION

Thus, since the entire angle range over which the dial unit rotates is divided into a plurality of range blocks and each block is designated to a specific position sensor to detect the rotational position of the dial unit within the range block, the position of the dial unit can be detected over the full angle range, even when the dial unit rotates over a large angle range. In addition, even when the rotational angle per step at the dial unit is set to a very small value, the required level of resolution is assured and thus, the dial unit is allowed to assume a greater number of steps.

In addition, in another mode of the present invention, the range over which the detection switch is in an ON state is designated for the detection of specific rotational positions assumed by the dial unit and the rotational position of the dial unit is determined based upon the output signal provided by the position sensor in the range over which the detection switch is in an OFF state. Thus, even when the number of steps over which the dial unit position is adjusted is greater than the number of steps over which the dial unit position can be detected by the position sensor, the detection switch in an OFF state is designated to detect the position of the dial unit over the range in which the dial unit position cannot be recognized by the position sensor. Thus, the dial unit is allowed to rotate over a great angle range, and the number of steps corresponding to the dial position increments can be increased while assuring the required level of reading resolution at the position sensor.

### BRIEF DESCRIPTION OF THE DRAWINGS

FIG. 1 is a front view of an operating panel equipped with rotary switch mechanisms according to the present invention;
FIG. 2 shows the layouts of the first gear units and the second gear units in the individual rotary switch mechanisms in FIG. 1;
FIG. 3 is a sectional view of a rotary switch mechanism;
FIG. 4 is an exploded sectional view of the rotary switch mechanism shown in FIG. 3;
FIG. 5 schematically shows how the first gear unit and the plurality of second gear units interlock, and also schematically shows the relationship between the detection switches and the cam;
FIG. 6 illustrates the relationship between the range over which the dial unit is able to move and the position sensors each designated to a specific block among a plurality of range blocks obtained by dividing the range of the dial displacement;
FIG. 7 illustrates the relationship between the ON/OFF states of the detection switches and the rotational angle of a specific position sensor, relative to a given rotational angle assumed by the dial unit;
FIG. 8 schematically shows how the first gear unit and the second gear units interlock and also schematically shows the relationship between the detection switches and the wall member that turns on/off the detection switches;
FIG. 9 schematically shows how the first gear unit and the second gear units interlock and also schematically shows the relationship between the detection switch and the cam;
FIG. 10 illustrates the relationship between the ON/OFF states of the detection switch and the rotational angle of the position sensor, relative to a specific rotational angle assumed by the dial unit;
FIG. 11 illustrates the relationship between the ON/OFF state of the detection switch and the rotational angle of the position sensor relative to a specific rotational angle assumed by the dial unit, observed in a structural example achieved by adopting the structure shown in FIGS. 9 and 10 in an output mode selector rotary switch mechanism;
FIG. 12 illustrates the relationship between the ON/OFF state of the detection switch and the rotational angle of the position sensor relative to a specific rotational angle assumed by the dial unit observed in a structural example achieved by adopting the structure shown in FIGS. 9 and 10 in an air flow volume selecting rotary switch mechanism;
FIG. 13 schematically shows how the first gear unit and the second gear unit interlock and also schematically shows another relationship that may be assumed by the detection switches and the cam;
FIG. 14 illustrates the relationship between the ON/OFF states of the detection switches and the rotational angle of the position sensor, relative to a specific rotational angle assumed by the dial unit; and
FIG. 15 illustrates the relationship between the ON/OFF states of the detection switches and the rotational angle at a specific position sensor, relative to a given rotational angle assumed by the dial unit, observed in a structural example achieved by adopting the structure shown in FIGS. 13 and 14 in a temperature setting selector rotary switch mechanism.

### EXPLANATION OF REFERENCE NUMERALS

- 10, 10a, 10b, 10c: dial unit
- 13, 13a, 13b, 13c-1, 13c-2, 13c-3: position sensor
- 16, 17, 21, 21a, 21b: detection switch

### BEST MODE FOR CARRYING OUT THE INVENTION

The following is an explanation of the best mode for carrying out the invention, given in reference to the attached drawings.

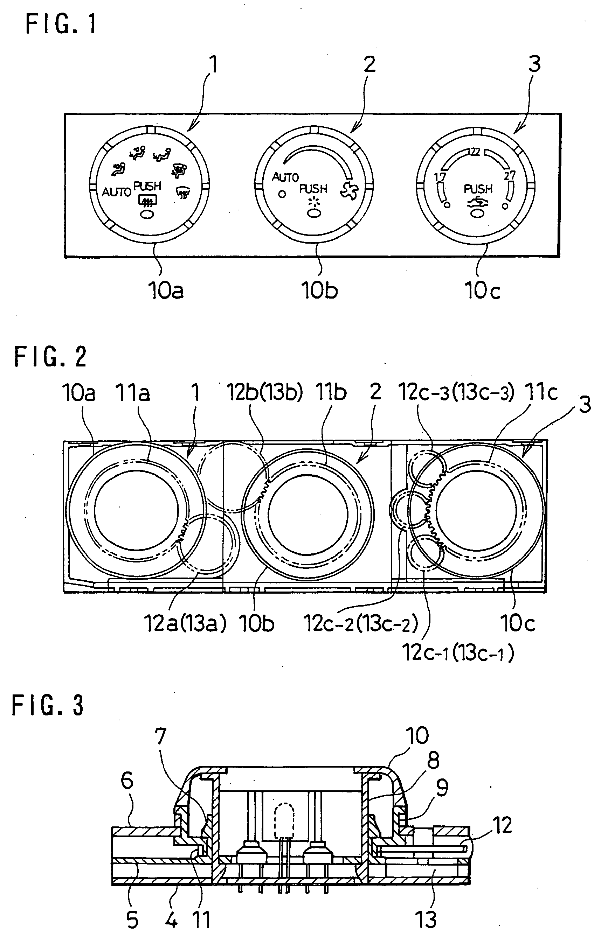

As shown in FIGS. 1 and 2, the rotary switch mechanism achieved in an embodiment of the present invention constitutes part of an operating panel operated to control, for instance, an automotive air-conditioning system. The operating panel in the example is equipped with an output mode selector rotary switch mechanism 1 via which a defrost mode, defrost-foot mode, a foot mode, a bilevel mode, a vent mode or an auto mode is selected as the output mode, an air blowing performance selector rotary switch 2 via which the air blowing performance is switched and a temperature setting selector rotary switch mechanism 3 via which the temperature setting for the temperature inside the cabin is switched.

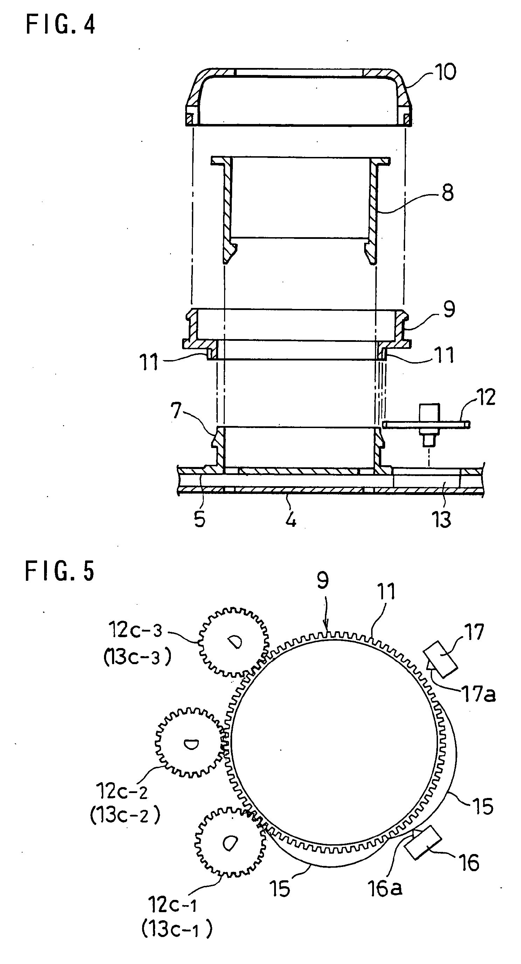

As shown in FIGS. 3 and 4, the rotary switch mechanisms each include a cylindrical distended portion 7 formed at a middle case 5 to which a printed circuit board is fixed so as to project out through a front case 6, a cylindrical inner member 8 set in contact with the inner side of the cylindrical distended portion 7 and fixed to the printed circuit board 4, a rotary knob mounting portion 9 rotatably attached to the cylindrical distended portion 7, a dial unit 10 fixed onto the rotary knob mounting portion 9 so as to rotate together with the rotary knob mounting portion, a first gear unit 11 formed at the side surface of the rotary knob mounting portion 9 toward the bottom thereof, a second gear unit 12 that interlocks with the first gear unit 11 and a position sensor 13 constituted with a rotary potentiometer mounted at a rotating shaft 12a of the second gear unit 12.

It is to be noted that the components of the individual rotary switch mechanisms are indicated by attaching the letter "a" to the components of the output mode selector rotary switch mechanism 1, attaching the letter "b" to the components of the air blowing performance selector rotary switch mechanism 2 and attaching the letter "c" to the components of the temperature setting selector rotary switch mechanism 3.

As shown in FIG. 2, the output mode selector rotary switch mechanism 1 and the air blowing performance selector rotary switch mechanism 2 each include a single second gear unit 12 (12a or 12b) to interlock with the first gear unit 11, whereas the temperature setting selector rotary switch mechanism 3 includes three second gear units (a second gear unit 12c-1, a second gear unit 12c-2 and a second gear unit 12c-3). In addition, the number of position sensors 13 included in each rotary switch mechanism corresponds to the number of second gear units included therein. Namely, the output mode selector rotary switch mechanism 1 and the air blowing performance selector rotary switch mechanism 2 each include a single position sensor (13a or 13b), whereas the temperature setting selector rotary switch mechanism 3 includes three position sensors (a first position sensor 13c-1, a second position sensor 13c-2 and a third position sensor 13c-3).

The full angle range over which the dial unit 10a is allowed to rotate is set to 210° in the output mode selector rotary switch mechanism 1, and the full angle range is divided into a total of 14 steps with the rotational angle per step set to 15°. The dial unit 10b in the air flow volume selector rotary switch mechanism 2 is allowed to rotate over an angle range of 200°, which is divided into a total of 10 steps with the rotational angle per step set to 20°. The speed-reducing ratio of the first gear unit 11a and the second gear unit 12a at the output mode selector rotary switch mechanism 1 is set to 0.55, whereas the speed-reducing ratio of the first gear unit 11b and the second gear unit 12b at the air flow volume selector rotary switch mechanism 2 is set to 0.65.

Accordingly, the rotational angle per step is set to approximately 27.3° at the position sensor 13a in the output mode selector rotary switch mechanism 1, and the rotational angle is set to approximately 308° per step at the position sensor 13b in the air flow volume selector rotary switch mechanism 2, both greater than the minimum step angle of 25° that can be detected by the position sensors.

In the temperature setting selector rotary switch mechanism 3, the full angle range over which the dial unit 10c is allowed to rotate is set to 252°, and the angle range is incremented into a total of 29 steps each corresponding to a 9° rotational angle set per step. The 29-step increments are set so as to allow the temperature setting to be adjusted in 0.5°C units over a range of 18°C through 32°C. The full angle range (252°) over which the dial unit 10c is allowed to rotate is divided into a plurality of range blocks, a specific position sensor is designated to each divided block, and the position sensor used in operation is switched based upon output signals provided by detection switches turned on/off as the dial unit 10c rotates.

More specifically, a circumscribing cam 15 is formed at the rotary knob mounting portion 9 where the first gear unit 11 is formed, two detection switches (a first detection switch (SW1) 16 and a second detection switch (SW2) 17) are disposed so as to achieve a predetermined phase difference relative to each other at positions facing opposite the cam surface of the circumscribing cam 15, movable pins 16a and 17a of the switches 16 and 17 are set in contact with the cam surface to turn on each switch over a specific range and turn off the switch over the other range, and the position sensor to be engaged in operation is thus switched based upon signals from the switches.

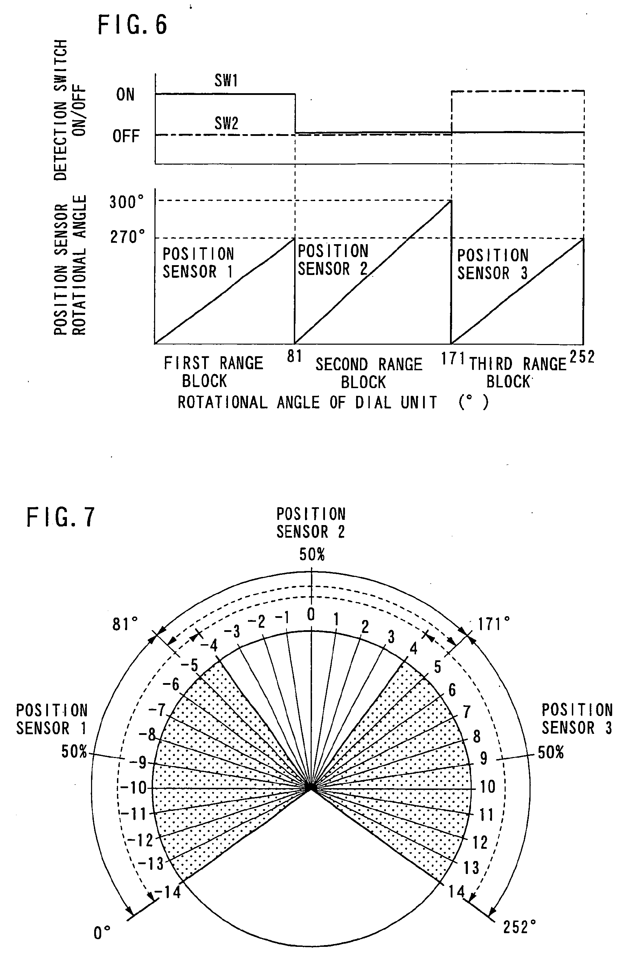

The detection switches 16 and 17 may be, for instance, bidirectional detector switches or momentary switches that are turned on/off as the movable pins 16a and 17a are displaced by the cam 15. In this example, the movable range (252°) of the dial unit 10c is divided into three blocks corresponding to first through third ranges (a first block corresponding to a range over 0° through 81°, a second block corresponding to a range over 81° through 171° and a third block corresponding to a range over 171° through 252°) and the cam 15 is formed so as to achieve the switching characteristics shown in FIG. 6. Namely, the cam 15 is formed so that the output signal from the first detection switch 16 is in an ON state in the first block and is in an OFF state in both the second and third range blocks and that the output signal from the second detection switch 17 is in an OFF state in the first and second blocks and is in an ON state in the third block.

The first position sensor 13c-1 is used when the output signal from the first detection switch (SW1) 16 is in an ON state and the output signal from the second detection switch (SW2) 17 is in an OFF state, the second position sensor 13c-2 is used when the output signals from both the first detection switch (SW1) 16 and the second detection switch (SW2) 17 are in an OFF state and the third position sensor 13c-3 is used when the output signal from the first detection switch (SW1) 16 is in an OFF state and the output signal from the second detection switch (SW2) 17 is in an ON state.

The speed-reducing ratio of the first gear unit 11c and the second gear unit (12c-1, 12c-2 and 12c-3) is set to 0.3 and the rotational angle per step is set to 30° at all the position sensors (13c-1, 13c-2 and 13c-3), which is greater than the minimum step angle (25°) that can be detected by the position sensors, so as to assure the required level of resolution. In addition, the first through third position sensors (13c-1, 13c-2 and 13c-3) are mounted by offsetting their rotational axes from one another so as to align the reference points at which the respective output signals indicate the value of 0 with the starting points of the corresponding blocks, as shown in FIGS. 5 through 7. Namely, the rotational angle of 0° assumed at the dial unit 10c is made to correspond to the reference point at which the output from the first position sensor (13c-1) indicates 0, the rotational angle of 81° assumed by the dial unit 10c is made to correspond to the reference point at which the output from the second position sensor (13c-2) indicates 0, and the rotational angle of 171° assumed by the dial unit 10c is made to correspond with the reference point at which the output from the third position sensor (13c-3) indicates 0. Accordingly, the first position sensor 13c-1 is disposed so as to detect the rotational position of the dial unit over the rotational angle range of 0° through 90° (from step -14 through step -4 in FIG. 7), the second position sensor 13c-2 is disposed so as to detect the rotational position of the dial unit over the rotational angle range of 81° through 171° (from step -5 through step 5 in FIG. 7) and the third position sensor 13c-3 is disposed so as to detect the rotational position of the dial unit over the rotational angle range of 162° through 252° (from step 4 through step 14 in FIG. 7), as shown in FIG. 7.

Thus, as the dial unit 10c is rotated to a position within the rotational angle range of 0° through 81° corresponding to the first nine steps, over which the first detection switch 16 is in an ON state and the second detection switch 17 is in an OFF state, the output value provided by the first position sensor 13c-1 is used. As the dial unit 10c is rotated to a position over the rotational angle range of 81° through 171° corresponding to the next 10 steps, over which the first and second detection switches 16 and 17 are both in an OFF state, the output value provided by the second position sensor 13c-2 is used and as the dial unit is rotated to a position within the rotational angle range of 171° through 252° corresponding to the next nine steps, over which the first detection switch 16 is in an OFF state and the second detection switch 17 is in and ON state, the output value provided by the third position sensor 13c-3 is used. Since the rotation of the dial unit 10c over a single step corresponds to a rotational angle of 30° at the position sensors, the rotational position assumed by the dial unit 10c can be ascertained accurately.

By adopting the structure described above in which a specific position sensor is designated to detect the rotational position of the dial unit 10c over each rotation range block among a plurality of rotation range blocks obtained by dividing the entire rotation range of the dial unit and the desired level of resolution is assured in the position detection in the individual blocks by selecting the position sensor to be used in operation based upon the output signals provided by the detection switches 16 and 17, the position of the dial unit 10c can be accurately detected over the entire range of its movement even when the rotational angle per step constituting a single increment in which the dial unit 10c rotates is set to a small value. In other words, the structure described above is effective in applications in which the dial unit 10c needs to rotate in smaller steps, e.g., when the temperature setting needs to be selected in 0.5°C increments.

It is to be noted that while three position sensors and two detection switches are used in the structure described above to enable position detection over the entire angle range within which the dial unit 10c is allowed to rotate, an alternative structure that includes two position sensors and a single detection switch may be adopted instead. In the alternative structure, the full angle range over which the dial unit is allowed to rotate should be divided into two range blocks, with either of the two position sensors designated to one of the blocks, a mechanism that turns on the detection switch over one of the range blocks and turns off the detection switch over the other range block should be provided, and the output value provided by one of the position sensors should be used when the detection switch is in an ON state and the output value provided by the other position sensor may be used when the detection switch is in an OFF state. As a further alternative, four or more position sensors should be utilized in a similar structure and, in such a case, a plurality of detection switches will be needed for use in conjunction with the position sensors.

In addition, while the detection switches are turned on/off via the cam 15 formed at the rotary knob mounting portion 9 in the structure described above, a wall 18 that rotates together with the dial unit and assumes an arc shape extending along the direction in which the dial unit rotates may be disposed at the rotary knob mounting portion 9 or the like, the movable pins 16a and 17a of the first detection switch 16 and the second detection switch 17 may be set on the locus of the displacement of the wall 18 and each detection switch may enter an ON state as its movable pin having come into contact with the wall 18 is pushed to become displaced by the wall 18 and may enter an OFF state as the movable pin departs the wall 18. It is to be noted that since the other structural features are similar to those in the preceding structural example, the same reference numerals are assigned to identical components to preclude the necessity for a repeated explanation thereof. This alternative structure, too, achieves advantages similar to those of the previous structural example.

While a plurality of position sensors are used in either of the structures described above so as to sequentially switch the position sensor used in operation to enable accurate position detection over the entire rotation range of the dial unit, the position of the dial unit can be detected over a wider detection range in conjunction with a single position sensor used with a detection switch.

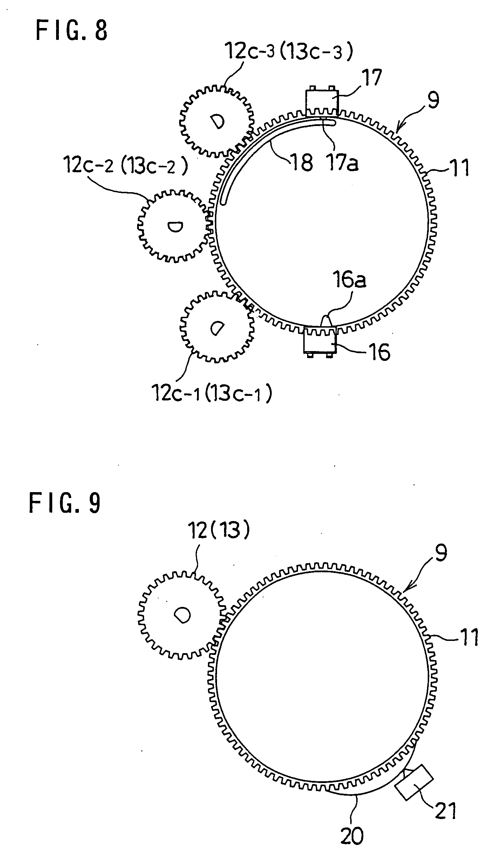

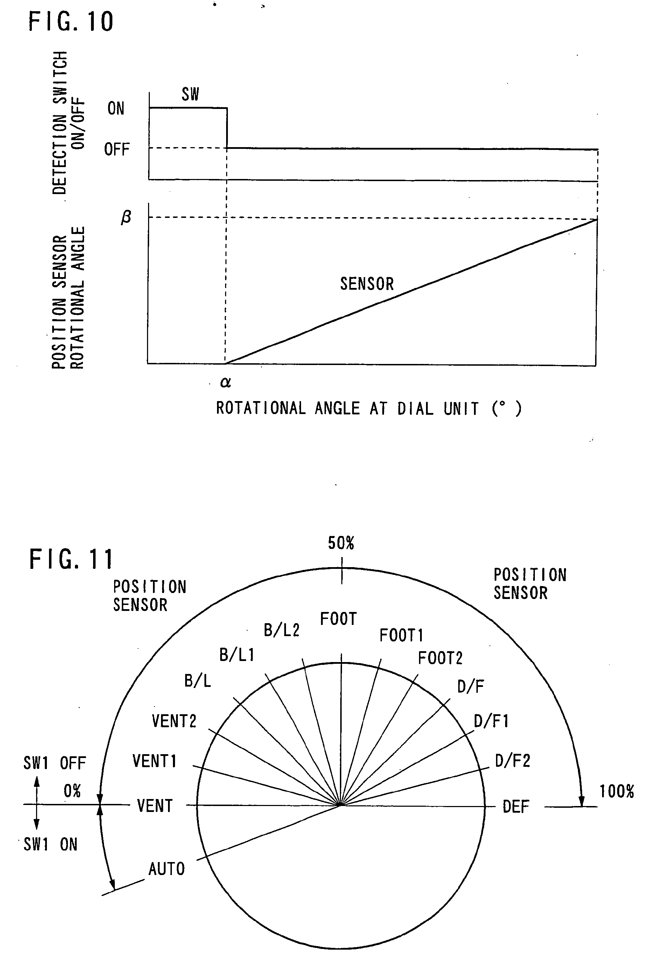

FIGS. 9 and 10 show a specific structural example adopting such a configuration. This example includes a single second gear unit 12 to interlock with the first gear unit 11 and also includes a position sensor 13 linked with the second gear unit 12. At the rotary knob mounting portion 9 at which the first gear unit 11 is formed, a cam 20 that includes a cam lobe projecting out over a predetermined angle range is formed, a detection switch 21 that can be turned on/off is disposed so as to face opposite the cam surface of the cam 20 and an ON state of the detection switch 21, set via the cam 20 (e.g., when the dial unit assumes a position within a range of 0 through α°), is made to correspond to a specific condition, whereas the rotational position of the dial unit 10 is detected based upon the output value provided by the position sensor 13 when the detection switch 21 is in an OFF state (e.g., when the rotational position of the dial unit is equal to or greater than α°). It is to be noted that since the other structural features are similar to those in the previous structural examples, the same reference numerals are assigned to identical components to preclude the necessity for a repeated explanation thereof.

Thus, even when the number of steps assumed at the dial unit 10 exceeds the maximum number of steps over which the sensor is able to detect a position, the range beyond the sensor detection range is made to correspond to the ON state of the detection switch 21 to enable detection of the position of the dial unit 10 assuming the greater number of steps by adopting the structure described above.

For instance, the structure shown in FIGS. 9 and 10 may be adopted in the output mode selector rotary switch mechanism 1 as shown in FIG. 11. The dial unit 10 in this example is allowed to rotate over a range of approximately 210°, with the range over which the detection switch 21, pressed by the cam lobe, is in an ON state set at or in the vicinity of a terminal position of the rotation range and the range over which the detection switch 21 is in an OFF state and the output value provided by the position sensor 13 is used for the position detection set in correspondence to the remaining rotation range of approximately 180°. The range over which the detection switch 21 assumes an ON state is designated to an auto mode for automatically selecting the optimal output mode, whereas the range over which the detection switch 21 assumed an OFF state is designated to a manual mode for selecting a specific output mode.

In the manual mode, a vent mode (VENT), a bilevel mode (B/L), a foot mode (FOOT) a defrost-foot mode (D/F), a defrost mode (DEF) or any intermediate modes between the individual modes may be selected. Namely, the output mode selection range, covering the vent mode (VENT) through the defrost mode (DEF) and the modes in between, include 13 different output stages (VENT, VENT 1, VENT 2, B/L, B/L 1, B/L 2, FOOT, FOOT 1, FOOT 2, D/F, D/F 1, D/F 2 and DEF) to choose from.

The intermediate modes between the vent mode and the B/L mode include VENT 1, which is closer to the VENT mode, and VENT 2, which is closer to the B/L mode. In addition, as an intermediate mode between the B/L mode and the FOOT mode, either B/L 1 closer to the B/L mode or B/L 2 closer to the FOOT mode can be selected. As an intermediate mode between the FOOT mode and the D/F mode, either FOOT 1 closer to the FOOT mode or FOOT 2 closer to the D/F mode can be selected. Furthermore, as an intermediate mode between the D/F mode and the defrost mode, D/F 1 closer to the D/F mode or D/F 2 closer to the defrost mode can be selected.

In addition, the remaining 180° of rotation range at the dial unit, over which the detection switch 21 is in an OFF state, is made to correspond to an electrical rotational angle range of 330° assumed by the position sensor, a single notch at the dial unit (approximately 15°) is made to match the angle increment by which the output mode is switched, and the sensor rotational angle turn notch is set to approximately 27°.

Since the output value provided by the position sensor 13 is designated to the output mode manual setting mode when the detection switch 21 is in an OFF state and an ON signal from the detection switch 21 is designated to the output mode auto selection mode, the entire electrical rotational angle range of the position sensor 13 can be used exclusively for the selection of the output mode in the manual setting mode, thereby making it possible to assure the required level of resolution for the position sensor 13. In addition, over the range beyond the maximum electrical rotational angle of the position sensor 13, the auto mode is selected in correspondence to an ON signal from the detection switch 21, and thus, the number of steps can be increased without having to add another position sensor.

Since the number of steps can be increased simply by adding the detection switch 21, the rotary switch mechanism retaining a simple structure can be manufactured at low cost.

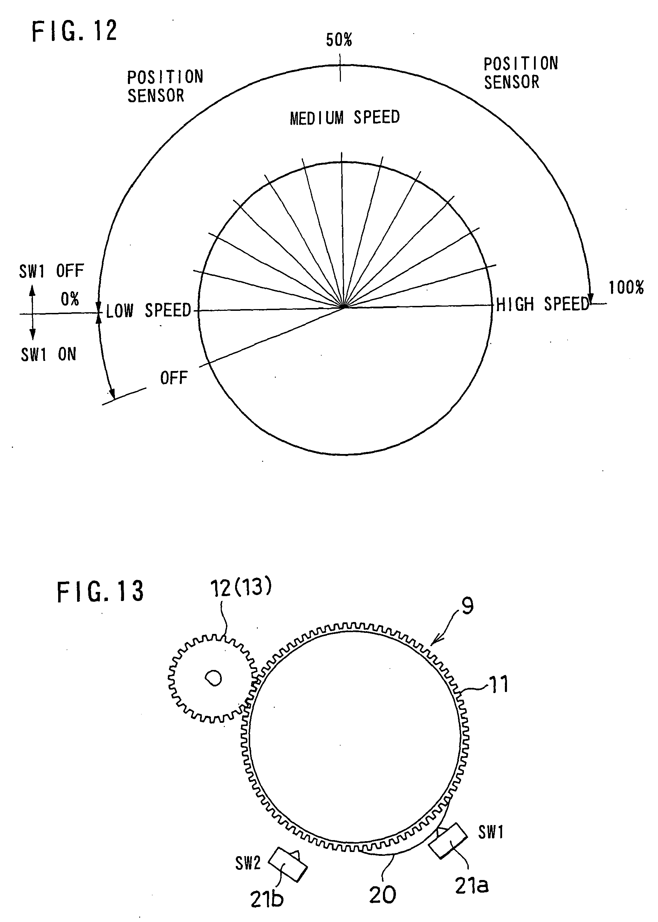

Alternatively, the structure shown in FIGS. 9 and 10 may be adopted in the air flow volume selector rotary switch mechanism 2, as shown in FIG. 12. In this example, too, the dial unit 10 is allowed to rotate over a range of approximately 210°, with the range over which the detection switch 21, pressed by the cam lobe, is in an ON state set at or in the vicinity of a terminal position of the rotation range and the range over which the detection switch 21 is in an OFF state and the output value provided by the position sensor 13 is used for the position detection set in correspondence to the remaining rotation range of approximately 180°. The range over which the detection switch 21 assumes an ON state is designated to an OFF mode in which the fan is turned off (OFF), whereas the range over which the switch 21 is in an OFF state is designated as a range over which the air flow rate (low ~ high) can be switched in multiple steps based upon the output value provided by the position sensor 13.

By adopting this structure, in which the entire electrical rotational angle range of the position sensor 13 is dedicated to the selection of the operating speed of the fan, the desired level of resolution can be assured for the position sensor even if the air flow rate is switched in small increments. In addition, over the range beyond the maximum electrical rotational angle of the position sensor 13, the fan off mode is selected in response to an ON signal from the switch 21. In other words, the number of steps can be increased without having to add another position sensor. As a result, the rotary switch mechanism retaining a simple structure can be manufactured at low cost.

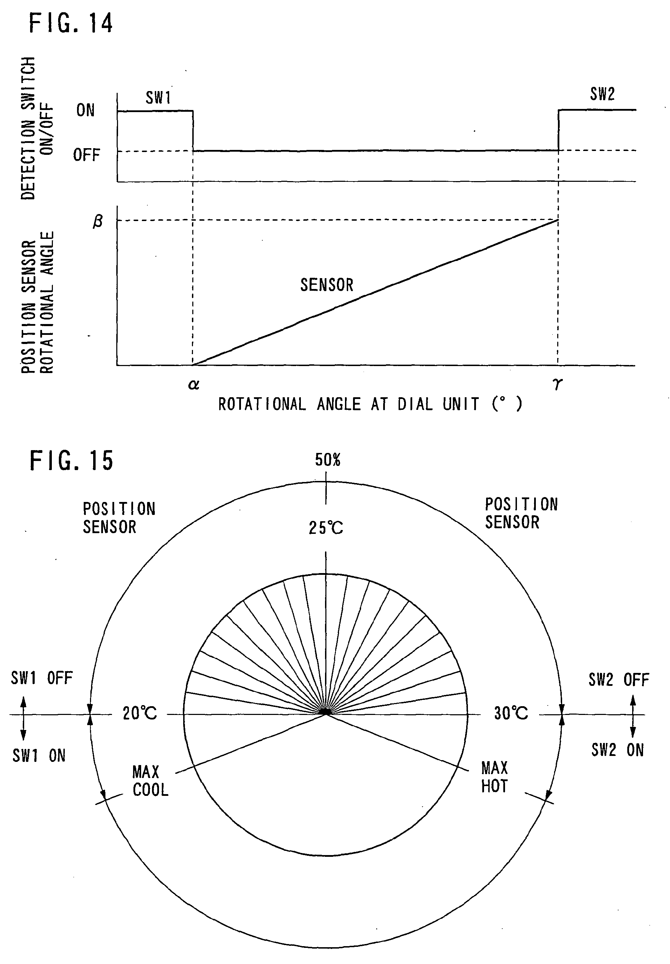

FIGS. 13 and 14 present another specific structural example that may be adopted to increase the detection-enabled range for the dial unit through combined use of a position sensor and detection switches. The structure achieved in the example includes a single second gear unit 12 to interlock with the first gear unit 11. and also includes a position sensor 13 linked with the second gear unit 12. A cam 20, which includes a cam lobe projecting out over a predetermined angle range, is formed at the rotary knob mounting portion 9 where the first gear unit 11 is formed, and two detection switches 21a and 21 b that can be turned on/off are disposed so as to face opposite the cam surface of the cam 20 with a predetermined phase difference relative to each other. The state in which one of the detection switches, i.e., the detection switch 21a, is turned on via the cam 20 (e.g., wherein the dial unit assumes a position within a range of 0 through α°) is designated to a given condition, the state in which the other detection switch 21b is turned on via the cam 20 (e.g., when the dial unit assumes a rotational position equal to or greater than γ°) is designated to another condition, and the rotational position of the dial unit 10 is detected based upon the output value provided by the position sensor 13 when both the detection switch 21a and the detection switch 21b are in an OFF state (e.g., when the dial unit assumes a rotational position within the range between α° and γ°). It is to be noted that since the other structural features are similar to those of the previous structural examples, the same reference numerals are assigned to identical components to preclude the necessity for a repeated explanation thereof.

Thus, even when the number of steps assumed at the dial unit 10 exceeds the maximum number of steps over which the sensor is able to detect a position, the range beyond the sensor detection range is made to correspond to the ON state of the detection switches 21a and 21b in the structure described above to enable detection of the position of the dial unit 10 assuming the greater number of steps.

The structure shown in FIGS. 13 and 14 may be adopted in the temperature setting selector rotary switch mechanism 3, as shown in FIG. 15. The dial unit 10 in the example is allowed to rotate over a range of approximately 240°, the range over which the detection switch (SW1) 21a, pressed by the cam lobe, is in an ON state is set at or in the vicinity of a terminal point of this rotation range, the range over which the detection switch (SW2) 21b, pressed by the cam lobe, is in an ON state is set at or in the vicinity of the other terminal point of the rotation range and the range over which the detection switches 21 are both in an OFF state and the position detection is executed by using the output value provided by the position sensor 13 is set over the remaining range of approximately 180°.

The range over which the detection switch 21a is in an ON state is designated to MAX COOL for selecting a temperature setting lower than the lower limit of the regular temperature setting range, the range over which the detection switch 21b is in an ON state is designated to MAX HOT for selecting a temperature setting higher than the upper limit of the regular temperature setting range, and the range over which both the detection switch 21a and the detection switch 21b are in an OFF state is designated to a range over which a temperature setting between 20°C and 30°C can be selected in steps.

Thus, in the structure described above, the output value provided by the position sensor 13 is used to select a temperature setting within the regular temperature setting range when both the detection switch 21a and the detection switch 21b are in an OFF state, the ON signal from the detection switch 21 a is designated to MAX COOL and the ON signal from the detection switch 21b is designated to MAX HOT. Since the entire electrical rotational angle range of the position sensor 13 is dedicated to the selection of a temperature setting within the regular temperature setting range, the desired level of resolution can be assured for the position sensor 13. In addition, over the range beyond the maximum electrical rotational angle of the position sensor 13, the max temperature setting selection mode is set in response to an ON signal provided by the detection switch 21a or the detection switch 21b. In short, the temperature setting can be selected in smaller steps without having to provide another position sensor.

Consequently, the number of steps can be increased simply by including the detection switches 21 a and 21 b, and the rotary switch mechanism retaining a simple structure can be manufactured at low cost.

### INDUSTRIAL APPLICABILITY

The present invention may be adopted in various industries in which dial knob-type selector switches are used.

## Claims

1. A rotary switch mechanism comprising a dial unit (10c) that is allowed to rotate in steps each corresponding to a predetermined angle and a position sensor (13c-1, 13c-2, 13c-3) that rotates with a predetermined speed-reducing ratio relative to the rotation of said dial unit (10c), with the rotational position of said dial unit (10c) determined based upon an output signal provided by said position sensor (13c-1, 13c-2, 13c-3), **characterized in:**
**that** said rotary switch mechanism includes a plurality of such position sensors (13c-1, 13c-2, 13c-3) and a detection switch (16, 17) that switches an output signal in correspondence to the rotational position of said dial unit (10c);
**that** the entire angle range over which said dial unit (10c) is allowed to rotate is divided into a plurality of range blocks and each divided block is designated to one of said position sensors (13c-1, 13c-2, 13c-3); and
**that** a position sensor (13c-1, 13c-2, 13c-3) to be used is selected based upon the output signal from the detection switch (16, 17).

2. A rotary switch mechanism according to claim 1, **characterized in:**
**that** said rotary switch mechanism includes three position sensors (13c-1, 13c-2, 13c-3) and two detection switches (16, 17); and
**that** said position sensor to be used is selected based upon output signals provided by said two detection switches (16, 17).

3. A rotary switch mechanism according to claim 2, **characterized in:**
**that** said three position sensors (13c-1, 13c-2, 13c-3) are a first position sensor (13c-1), a second position sensor (13c-2) and a third position sensor (13c-3);
**that** said two detection switches (16, 17) are a first on/off switch and a second on/off switch;
**that** the range over which said dial unit (10c) is allowed to rotate is divided into first through third range blocks, the output signal from said first detection switch (16) is set to an ON state in the first block but set to an OFF state in the second and third range blocks and the output signal from said second detection switch (17) is set to an OFF state in the first and second blocks but set to an ON state in said third block; and
**that** said first position sensor (13c-1) is used when the output signal from said first detection switch (16) is in an ON state and the output signal from said second detection switch (17) is in an OFF state, said second position sensor (13c-2) is used when the output signals from said first detection switch (16) and said second detection switch (17) are both in an OFF state, and said third position sensor (13c-3) is used when the output signal from said first detection switch (16) is in an OFF state and the output signal from said second detection switch (17) is in an ON state.

4. A rotary switch mechanism according to any of claims 1, 2 and 3, **characterized in:**
**that** said detection switch is each turned on/off as a movable pin (16a,17a) thereof comes into contact with a cam surface of a cam (15) that rotates as said dial unit (10c) rotates, and said movable pin (16a,17a) is moved via said cam (15).

5. A rotary switch mechanism according to any of claims 1, 2 and 3, **characterized in:**
**that** a wall formed in an arc shape is caused to rotate as said dial unit (10c) rotates, said detection switch (16,17) includes a movable pin (16a, 17a) disposed on the locus of the wall (18) displacement and said detection switch (16,17) enters an ON state as said movable pin (16a, 17a) comes into contact with said wall (18) and is pressed by said wall (18) to become displaced but remains in an OFF state otherwise.

6. A rotary switch mechanism comprising a dial unit (10) allowed to rotate in steps each corresponding to a predetermined angle and a position sensor (13) that rotates with a predetermined speed-reducing ratio relative to the rotation of said dial unit (10), with the rotational position of said dial unit determined based upon an output signal provided by said position sensor (13), **characterized in:**
**that** said rotary switch mechanism includes a detection switch (21) that enters an ON state over a specific rotation range of said dial unit and remains in an OFF state over the remaining range;
**that** the range over which said detection switch (21) is in an ON state is designated to specific rotational positions of said dial unit (10), whereas the rotational position of said dial unit (10) is determined based upon the output signal provided by said position
sensor (13) over the range in which said detection switch (21) remains in an OFF state.

7. A rotary switch mechanism according to claim 6 **characterized in:**
**that** the range over which said detection switch (21) is in an ON state is set at or near a terminal position assumed by said dial unit (10) along the rotating direction thereof.

8. A rotary switch mechanism according to either claim 6 or claim 7, **characterized in:**
**that** said rotary switch mechanism is used to select an output mode and includes a single detection switch (21), with the range over which said detection switch (21) is in an ON state designated to an auto mode and the range over which said detection switch (21) is in an OFF state designated to a manual setting mode.

9. A rotary switch mechanism according to either claim 6 or claim 7, **characterized in:**
**that** said rotary switch mechanism is used to select an air flow volume and includes a single detection switch (21), with the range over which said detection switch (21) is in an ON state designated to a fan-off mode and the range over which said detection switch (21) is in an OFF state designated to a mode for setting the fan speed.

10. A rotary switch mechanism according to either claim 6 or claim 7, **characterized in:**
**that** said rotary switch mechanism is used to select a temperature setting for the temperature within the cabin and includes two detection switches (21 a,21 b), with the range over which one of said detection switches (21a,21b) is in an ON state designated to a mode for selecting a temperature setting lower than the lower limit of a regular temperature setting range, the range over which the other detection switch is in an ON state designated to a mode for selecting a temperature setting higher than the upper limit of the regular temperature setting range and the range over which the two detection switches are both in an OFF state designated to a mode for selecting a temperature setting within the regular temperature setting range.
